# EUROPEAN PATENT SPECIFICATION

(11) **EP 1 662 909 B1**
(45) Date of publication and mention of the grant of the patent: **24.01.2007**
(21) Application number: 05742729.6
(22) Date of filing: 06.05.2005
(51) Int. Cl.: A23L 1/308, A21D 2/00, A21D 13/00

(54) **FOOD COMPOSITIONS**
NAHRUNGSZUSAMMENSETZUNGEN
COMPOSITIONS ALIMENTAIRES

(30) Priority: 12.05.2004 IT MI20040956
(43) Date of publication of application: 07.06.2006
(73) Proprietor: Curti, Alessandro, 20122 Milano (IT); Seneci, Alessandro, 20090 Milano 2 Segrate (IT)
(72) Inventor: SENECI, Alessandro, 20090 Milano 2 Segrate (IT)
(74) Representative: Pistolesi, Roberto
(86) International application number: PCT/IT2005/000266
(87) International publication number: WO 2005/107499

(56) References cited:
- EP-A- 0 756 828
- EP-A- 1 010 374
- WO-A-97/00617
- US-A- 5 629 041
- US-B1- 6 248 375
- CUMMINGS J H ET AL: "Dietary carbohydrates and health: do we still need the fibre concept?" CLINICAL NUTRITION SUPPLEMENTS, ELSEVIER, vol. 1, no. 2, 2004, pages 5-17, XP004657610 ISSN: 1744-1161

## Description

The present invention relates to a novel foodstuff composition capable of reducing the glycaemic, insulinaemic and lipaemic peak after the ingestion of monosaccharides, disaccharides, polysaccharides, lipids and proteins contained therein and contained in the food which may accompany the ingestion thereof; the composition is also capable of introducing soluble fibres having a probiotic effect for the re-balancing and nourishing of bacterial flora. The composition also reduces the glycaemic index of food prepared therewith.

The foodstuff composition according to the present invention is preferably in the form of a powder and can be used in addition to flour for the preparation of food products, such as, for example, bread, baked goods, pasta, biscuits, confectionery, etc.; in particular, approximately 65% by weight of the composition has a granulometry of less than 25 mesh, approximately 20% has a granulometry greater than 25 mesh, approximately 15% has a granulometry greater than 22 mesh, and approximately 1% has a granulometry greater than 19 mesh.

The composition according to the present invention contains from 50 to 90% by weight of inulin or fructooligosaccharides, from 10 to 40% by weight of gelling fibres, and from 1 to 10% by weight of water-insoluble fibres, with respect to the total weight of the composition (that is to say, where the sum of the individual components comes to 100).

The gelling fibre is preferably selected from glucomannan, guar gum, karaya gum, psyllium fibre, acacia fibre and/or pectin; the insoluble fibre is preferably selected from wheat fibre, cellulose, hemicellulose and/or lignin, the cellulose preferably being in microcrystalline form.

According to a first preferred aspect of the invention, the composition contains from 60 to 80% by weight of inulin or fructooligosaccharides, preferably from 65 to 75% by weight, and even more preferably approximately 70% by weight.

According to a second preferred aspect of the invention, the composition contains from 15 to 35% by weight of gelling fibres, preferably from 20 to 30% by weight, and even more preferably approximately 25% by weight.

According to a third preferred aspect of the invention, the composition contains from 3 to 7% by weight of insoluble fibre, preferably from 4 to 6% by weight, and even more preferably approximately 5% by weight.

It should be emphasized that all of the fibres that can be used for the invention, that is to say, soluble and insoluble fibres, may be used as such or in their naturally occurring non-purified form. For example, inulin may be used in the form of chicory fibre, pectin in the form of apple and/or orange fibre, and cellulose in the form of wheat and/or oat fibre, etc.

According to the preferred aspect of the invention, the foodstuff composition is constituted by 70% by weight of inulin, 5% by weight of glucomannan, 20% by weight of guar gum and 5% by weight of wheat fibre.

As mentioned above, the foodstuff composition according to the present invention can be used in admixture with soft wheat flour and/or durum wheat flour for the preparation of food products, such as, for example, bread, baked goods, pasta, biscuits, confectionery, etc.

For that purpose, 2-8 parts by weight of foodstuff composition can be mixed with 40-60 parts by weight of soft wheat flour and/or durum wheat flour; according to a preferred aspect, 4-6 parts by weight of composition, preferably 4.5-5.5, and even more preferably approximately 5, are mixed with 44-56, preferably 48-52, and even more preferably approximately 50 parts by weight of flour.

For the purposes of the present invention, the percentages are to be understood as percentages by weight with respect to the total weight of the composition. According to a preferred aspect, the composition according to the present invention comprises inulin and/or fructooligosaccharides, gelling fibres and water-insoluble fibres in the ratios by weight indicated above.

### Experimental section

A foodstuff composition according to the present invention (hereinafter indicated by the term "brake"), and having the qualitative-quantitative composition indicated hereinafter was used to evaluate the reduction in the glycaemic peak resulting from the consumption of biscuits with respect to a reference standard:
- inulin: 70% by weight;
- glucomannan: 5% by weight;
- guar gum: 20% by weight;
- wheat fibre: 5% by weight.

The composition of the "braked" biscuits, that is to say, containing the "brake" according to the present invention, is shown hereinafter together with that of the comparison biscuits not containing any "brake".

| grams | % by weight | Product | Quantity normal biscuit | Quantity "braked" biscuit |
|---|---|---|---|---|
| 5800 | 54.00 | Soft wheat flour | 2900 | 2510 |
| | | + 13.5% of brake by gross | | 390 |
| | | weight | | |
| 2200 | 20.50 | Butter | 1200 | 1200 |
| 2000 | 18.60 | Caster sugar | 1000 | 1000 |
| 360 | 3.40 | Large whole eggs (No. 3) | 178 | 180 |
| 370 | 3.50 | Egg yolks | 182 | 182 |
| 2 | 0.02 | Vanilla flavouring | 1 | 1 |
| 4 | 0.04 | Lemon flavouring | 2 | 2 |
| Total | 100.06 | Yield - 15% after baking | 5463 | 5465 |
| | | in a fan oven at 210°C for 13 minutes | 4300 | 4900 |

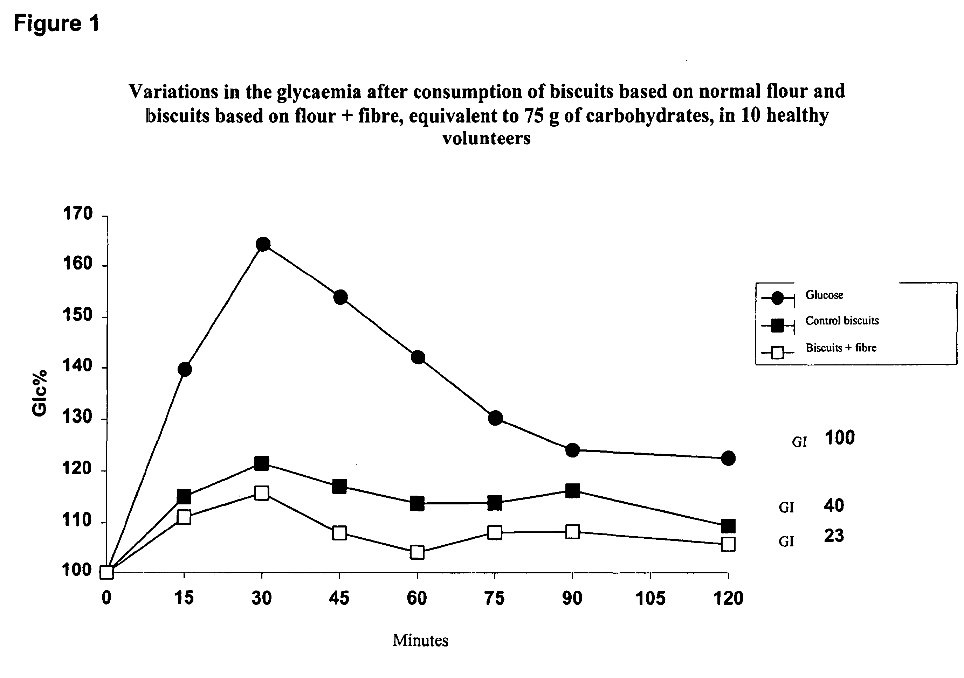

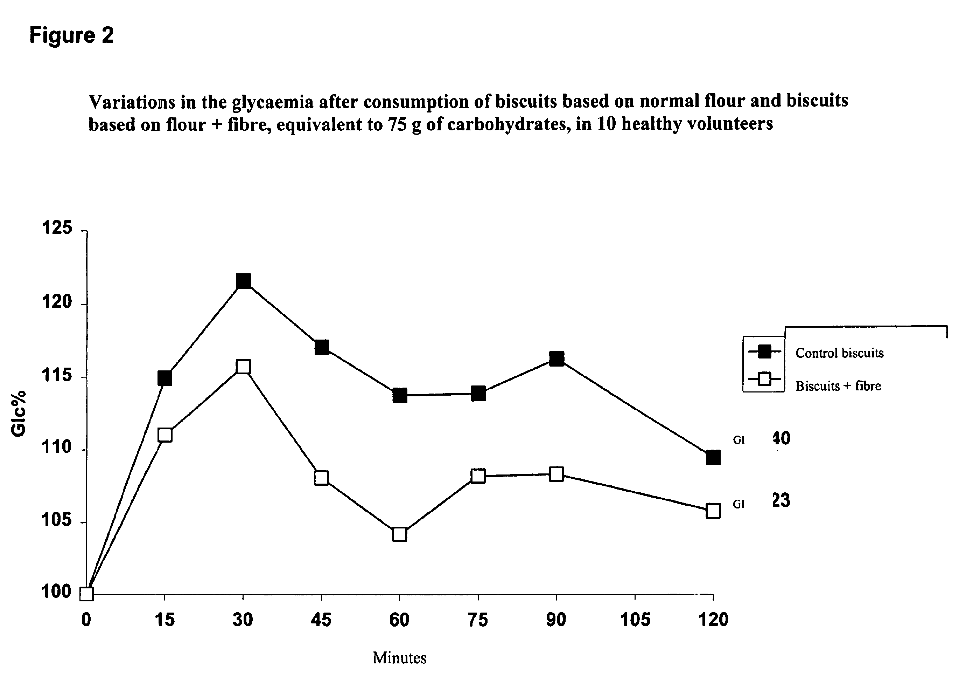

The "braked" biscuits and the control biscuits not containing any "brake", were administered to 10 healthy volunteers whose glycaemic levels were measured compared with a reference standard based on pure glucose. The results are shown in Figures 1 and 2 (where the "braked" biscuit is indicated as "biscuit + fibre").

Figure 1, in particular, shows the glycaemic levels compared with the reference standard; Figure 2 on the other hand shows only the glycaemic levels resulting from the consumption of the biscuits. As will be readily appreciated, the presence in the biscuits of the composition according to the invention permits a reduction in the glycaemic index of 42.5% in the "braked" biscuit compared with the normal biscuit.

## Claims

1. A foodstuff composition containing from 50 to 90% by weight of inulin or fructooligosaccharides, from 10 to 40% by weight of gelling fibres, and from 1 to 10% by weight of water-insoluble fibres, with respect to the total weight of the composition.

2. A foodstuff composition according to claim 1, **characterized in that** the gelling fibre is selected from glucomannan, guar gum, karaya gum, psyllium fibre, acacia fibre and/or pectin.

3. A foodstuff composition according to claim 1, **characterized in that** the insoluble fibre is selected from wheat fibre, cellulose, hemi-cellulose and/or lignin.

4. A foodstuff composition according to claim 3, **characterized in that** the cellulose is in microcrystalline form.

5. A foodstuff composition according to any one of the preceding claims, **characterized in that** it contains from 60 to 80% by weight of inulin or fructooligosaccharides.

6. A foodstuff composition according to any one of the preceding claims, **characterized in that** it contains from 65 to 75% by weight of inulin or fructooligosaccharides.

7. A foodstuff composition according to any one of the preceding claims, **characterized in that** it contains approximately 70% by weight of inulin or fructooligosaccharides.

8. A foodstuff composition according to any one of the preceding claims, **characterized in that** it contains from 15 to 35% by weight of gelling fibres.

9. A foodstuff composition according to any one of the preceding claims, **characterized in that** it contains from 20 to 30% by weight of gelling fibres.

10. A foodstuff composition according to any one of the preceding claims, **characterized in that** it contains approximately 25% by weight of gelling fibres.

11. A foodstuff composition according to any one of the preceding claims, **characterized in that** it contains from 3 to 7% by weight of insoluble fibres.

12. A foodstuff composition according to any one of the preceding claims, **characterized in that** it contains from 4 to 6% by weight of insoluble fibres.

13. A foodstuff composition according to any one of the preceding claims, **characterized in that** it contains approximately 5% by weight of insoluble fibres.

14. A foodstuff composition according to any one of the preceding claims, **characterized in that** it contains approximately 70% by weight of inulin, approximately 5% by weight of glucomannan, approximately 20% by weight of guar gum and approximately 5% by weight of wheat fibre.

15. A foodstuff composition containing 2-8 parts by weight, preferably 4-6, of a composition according to claims 1-14, and 40-60 parts by weight, preferably 44-56, of soft wheat flour and/or durum wheat flour.

16. A foodstuff composition containing 4.5-5.5 parts by weight, preferably approximately 5, of a composition according to claims 1-14, and 48-52 parts by weight, preferably approximately 50, of soft wheat flour and/or durum wheat flour.

17. Food products containing a foodstuff composition according to claims 1-16.

18. Food products according to claim 17, selected from bread, baked goods, pasta, biscuits, confectionery.

19. Use of a foodstuff composition according to claims 1-16 for the preparation of food products.

20. A non therapeutic use of a foodstuff composition or a food product according to any one of the preceding claims for the reduction of the glycaemic, insulinaemic and/or lipaemic peak caused by the consumption of monosaccharides, disaccharides, polysaccharides, lipids and/or proteins.

## Patentansprüche

1. Nahrungsmittelzusammensetzung mit von 50 bis 90 Gewichtsprozent Inulin oder Fructooligosacchariden, von 10 bis 40 Gewichtsprozent gelierende Fasern und von 1 bis 10 Gewichtsprozent wasserunlöslichen Fasern, bezogen auf das Gesamtgewicht der Zusammensetzung.

2. Nahrungsmittelzusammensetzung nach Anspruch 1, **dadurch gekennzeichnet, dass** die gelierende Faser ausgewählt ist unter Glucomannan, Guargum, Karayagum, Psyllium-Faser, Acacia-Faser und/oder Pectin.

3. Nahrungsmittelzusammensetzung nach Anspruch 1, **dadurch gekennzeichnet, dass** die unlösliche Faser ausgewählt ist unter Weizenfaser, Cellulose, Hemi-Cellulose und/oder Lignin.

4. Nahrungsmittelzusammensetzung nach Anspruch 3, **dadurch gekennzeichnet, dass** die Cellulose in mikrokristalliner Form vorliegt.

5. Nahrungsmittelzusammensetzung nach einem der vorhergehenden Ansprüche, **dadurch gekennzeichnet, dass** sie von 60 bis 80 Gewichtsprozent Inulin oder Fructooligosaccharide enthält.

6. Nahrungsmittelzusammensetzung nach einem der vorhergehenden Ansprüche, **dadurch gekennzeichnet, dass** sie von 65 bis 75 Gewichtsprozent Inulin oder Fructooligosaccharide enthält.

7. Nahrungsmittelzusammensetzung nach einem der vorhergehenden Ansprüche, **dadurch gekennzeichnet, dass** sie etwa 70 Gewichtsprozent Inulin oder Fructooligosaccharide enthält.

8. Nahrungsmittelzusammensetzung nach einem der vorhergehenden Ansprüche, **dadurch gekennzeichnet, dass** sie von 15 bis 35 Gewichtsprozent gelierende Fasern enthält.

9. Nahrungsmittelzusammensetzung nach einem der vorhergehenden Ansprüche, **dadurch gekennzeichnet, dass** sie von 20 bis 30 Gewichtsprozent gelierende Fasern enthält.

10. Nahrungsmittelzusammensetzung nach einem der vorhergehenden Ansprüche **dadurch gekennzeichnet, dass** sie etwa 25 Gewichtsprozent gelierende Fasern enthält.

11. Nahrungsmittelzusammensetzung nach einem der vorhergehenden Ansprüche, **dadurch gekennzeichnet, dass** sie von 3 bis 7 Gewichtsprozent unlösliche Fasern enthält.

12. Nahrungsmittelzusammensetzung nach einem der vorhergehenden Ansprüche, **dadurch gekennzeichnet, dass** sie von 4 bis 6 Gewichtsprozent unlösliche Fasern enthält.

13. Nahrungsmittelzusammensetzung nach einem der vorhergehenden Ansprüche, **dadurch gekennzeichnet, dass** sie etwa 5 Gewichtsprozent unlösliche Fasern enthält.

14. Nahrungsmittelzusammensetzung nach einem der vorhergehenden Ansprüche, **dadurch gekennzeichnet, dass** sie etwa 70 Gewichtsprozent Insulin, etwa 5 Gewichtsprozent Glucomannan, etwa 20 Gewichtsprozent Guargum und etwa 5 Gewichtsprozent Weizenfaser enthält.

15. Nahrungsmittelzusammensetzung mit 2-8, vorzugsweise 4-6 Gewichtsteilen einer Zusammensetzung nach einem der Ansprüche 1-14, und 40-60, vorzugsweise 44-56 Gewichtsteilen an weichem Weizenmehl und/oder Hartweizenmehl.

16. Nahrungsmittelzusammensetzung mit 4,5-5,5, vorzugsweise etwa 5 Gewichtsteilen einer Zusammensetzung nach einem der Ansprüche 1-14, und 48-52, vorzugsweise etwa 50 Gewichtsteilen an weichem Weizenmehl und/oder Hartweizenmehl.

17. Nahrungsmittelprodukte mit einer Nahrungsmittelzusammensetzung nach einem der Ansprüche 1-16.

18. Nahrungsmittelzusammensetzung nach Anspruch 17, ausgewählt unter Brot, Backwaren, Pasta, Biskuits, Süßigkeiten.

19. Verwendung einer Nahrungsmittelzusammensetzung nach einem der Ansprüche 1-16 zur Herstellung von Nahrungsmittelprodukten.

20. Nicht-therapeutische Verwendung einer Nahrungsmittelzusammensetzung oder eines Nahrungsmittelproduktes nach einem der vorhergehenden Ansprüche zur Reduktion des glykämischen, insulämischen und/oder lipaemischen Peaks, welcher durch den Verzehr von Monosacchariden, Disacchariden, Polysacchariden, Lipiden und/oder Proteinen hervorgerufen wurde.

## Revendications

1. Composition alimentaire contenant de 50 à 90% en poids d'inuline ou de fructooligosaccharides, de 10 à 40% en poids de fibres gélifiantes et de 1 à 10% en poids de fibres insolubles dans l'eau, par rapport au poids total de la composition.

2. Composition alimentaire selon la revendication 1, **caractérisée en ce que** la fibre gélifiante est choisie parmi du glucomannane, de la gomme de guar, de la gomme de karaya, de la fibre de psyllium, de la fibre d'acacia et/ou de la pectine.

3. Composition alimentaire selon la revendication 1, **caractérisée en ce que** la fibre insoluble est choisie parmi de la fibre de blé, de la cellulose, de l'hémicellulose et/ou de la lignine.

4. Composition alimentaire selon la revendication 3, **caractérisée en ce que** la cellulose est sous forme microcristalline.

5. Composition alimentaire selon l'une quelconque des revendications précédentes, **caractérisée en ce qu'**elle contient de 60 à 80% en poids d'inuline ou de fructooligosaccharides.

6. Composition alimentaire selon l'une quelconque des revendications précédentes, **caractérisée en ce qu'**elle contient de 65 à 75% en poids d'inuline ou de fructooligosaccharides.

7. Composition alimentaire selon l'une quelconque des revendications précédentes, **caractérisée en ce qu'**elle contient environ 70% en poids d'inuline ou de fructooligosaccharides.

8. Composition alimentaire selon l'une quelconque des revendications précédentes, **caractérisée en ce qu'**elle contient de 15 à 35% en poids de fibres gélifiantes.

9. Composition alimentaire selon l'une quelconque des revendications précédentes, **caractérisée en ce qu'**elle contient de 20 à 30% en poids de fibres gélifiantes.

10. Composition alimentaire selon l'une quelconque des revendications précédentes, **caractérisée en ce qu'**elle contient environ 25% en poids de fibres gélifiantes.

11. Composition alimentaire selon l'une quelconque des revendications précédentes, **caractérisée en ce qu'**elle contient de 3 à 7% en poids de fibres insolubles.

12. Composition alimentaire selon l'une quelconque des revendications précédentes, **caractérisée en ce qu'**elle contient de 4 à 6% en poids de fibres insolubles.

13. Composition alimentaire selon l'une quelconque des revendications précédentes, **caractérisée en ce qu'**elle contient environ 5% en poids de fibres insolubles.

14. Composition alimentaire selon l'une quelconque des revendications précédentes, **caractérisée en ce qu'**elle contient environ 70% en poids d'inuline, environ 5% en poids de glucomannane, environ 20% en poids de gomme de guar et environ 5% en poids de fibre de blé.

15. Composition alimentaire contenant 2-8 parties en poids, de préférence 4-6, d'une composition selon les revendications 1 à 14, et 40-60 parties en poids, de préférence 44-56, de farine de blé tendre et/ou de farine de blé dur.

16. Composition alimentaire contenant 4,5-5,5 parties en poids, de préférence environ 5, d'une composition selon les revendications 1 à 14, et 48-52 parties en poids, de préférence environ 50, de farine de blé tendre et/ou de farine de blé dur.

17. Produits alimentaires contenant une composition alimentaire selon les revendications 1 à 16.

18. Produits alimentaires selon la revendication 17, choisis parmi du pain, des aliments cuits, des pâtes, des biscuits, des confiseries.

19. Utilisation d'une composition alimentaire selon les revendications 1 à 16 pour la préparation de produits alimentaires.

20. Utilisation non thérapeutique d'une composition alimentaire ou d'un produit alimentaire selon l'une quelconque des revendications précédentes pour la réduction du pic glycémique, insulinémique et/ou lipémique dû à la consommation de monosaccharides, de disaccharides, de polysaccharides, de lipides et/ou de protéines.
